# EUROPÄISCHE PATENTANMELDUNG

(11) **EP 1 182 849 A1**
(43) Veröffentlichungstag der Anmeldung: **27.02.2002**
(21) Anmeldenummer: 00810760.9
(22) Anmeldetag: 25.08.2000
(51) Int. Cl.: H04M 1/02

(54) **Mobiles elektronisches Kommunikationsgerät mit Vibrationseinheit**

(71) Anmelder: Roulements Miniatures S.A., 2500 Biel (CH)
(72) Erfinder: Schäfer, Lothar, 65606 Villmar (DE)
(74) Vertreter: Liebetanz, Michael, Dipl.-Phys.

(57) **Zusammenfassung**

Ein mobiles elektronisches Kommunikationsgerät (1) verfügt über eine Vibrationseinheit (2; 3, 4), die einen Elektromotor (3) umfasst. Ferner ist sie mit einer elektronischen Steuerung zur Ansteuerung der Vibrationseinheit (2; 3, 4) versehen, so dass das elektronische Kommunikationsgerät (1) unter vordefinierten ersten Betriebszuständen in Vibrationen versetzbar ist. Dabei ist ferner eine bewegliche Abdeckung (7) oder Antenne vorgesehen, die über eine mechanische Kopplung (8) mit der Vibrationseinheit (2; 3, 4) verbunden ist. Die elektronische Steuerung bringt dann bei vordefinierten zweiten Betriebszuständen den Elektromotor (3) zur Rotation, so dass über die mechanische Kopplung (8) die bewegliche Abdeckung (7) sich öffnet oder schliesst bzw. die Antenne aus- oder eingefahren wird.

## Beschreibung

Die Erfindung betrifft ein mobiles elektronisches Kommunikationsgerät mit einer Vibrationseinheit, die einen Elektromotor umfasst, und mit einer elektronischen Steuerung zur Ansteuerung der Vibrationseinheit, so dass das elektronische Kommunikationsgerät unter vordefinierten ersten Betriebszuständen in Vibrationen versetzbar ist, sowie eine Vibrationseinheit für ein solches Gerät.

Bei mobilen elektronischen Kommunikationsgeräten wie Mobiltelefonen sind Vibrationseinheiten aus dem Stand der Technik bekannt und werden beispielsweise dort eingesetzt, um anstelle oder zusätzlich zu einem Geräusch, den Benutzer durch eine Vibration des Vibrationsmotors auf ein eingehendes Gespräch oder Mitteilung oder allgemein bei Eintreten eines vordefinierten Betriebszustandes auf diesen aufmerksam zu machen.

Mobiltelefone und andere elektronische Kommunikationsgeräte verfügen häufig über Klappen oder Abdeckungen, mit denen die Tastatur und/oder das Display des Gerätes abgedeckt um damit insbesondere das Gerät vor Fehlbedienungen und Beschädigungen zu schützen. Diese Klappen sind zum Teil mechanisch betätigbar und zum Teil werden sie durch einen Elektromotor geöffnet und geschlossen.

Ausgehend von diesem Stand der Technik liegt der Erfindung die Aufgabe zugrunde ein mobiles elektronisches Kommunikationsgerät der eingangs genannten Art so zu verbessern, dass ein sowohl eine solche Klappe oder Abdeckung, eine Antenne oder ein anderes bewegliches Element als auch einen Vibrationsalarm aufweisendes elektronisches Kommunikationsgerät weiter miniaturisiert werden kann.

Diese Aufgabe wird erfindungsgemäss dadurch gelöst, dass eine bewegliche Abdeckung oder Antenne vorgesehen ist, die über eine mechanische Kopplung mit der Vibrationseinheit verbunden ist, und dass die elektronische Steuerung bei vordefinierten zweiten Betriebszuständen den Elektromotor zur Rotation bringt, so dass über die mechanische Kopplung die bewegliche Abdeckung sich öffnet oder schliesst bzw. die Antenne aus- oder eingefahren wird.

Dabei wird der notwendige Raum für die Antriebe minimiert, indem ein und derselbe Antrieb für die Erzeugung der Vibration und für den Klappenantrieb verwendet wird. Die Erfindung nutzt die Erkenntnis aus, dass eine Vibration des Motors die Funktion als Antrieb für einen Klappenantrieb in keiner Weise behindert.

Weitere vorteilhafte Ausführungsformen sind in den Unteransprüchen gekennzeichnet.

Die Erfindung wird nun unter Bezugnahme auf die Zeichnungen beispielhaft erläutert. Es zeigen:
- Fig. 1: eine Draufsicht auf ein Mobiltelefon als Ausführungsbeispiel der Erfindung mit einer erfindungsgemässen Vibrationseinheit,
- Fig. 2: eine vergrösserte Detailansicht des Kreises II aus Fig. 1,
- Fig. 3: eine teilweise geschnittene perspektivische Ansicht eines zweiten Ausführungsbeispiels eines Mobiltelefons,
- Fig. 4: eine schematische Seitenansicht des Ausführungsbeispiels nach Fig. 3, und
- Fig. 5: eine vergrösserte Detailansicht des Kreises V aus Fig. 4.

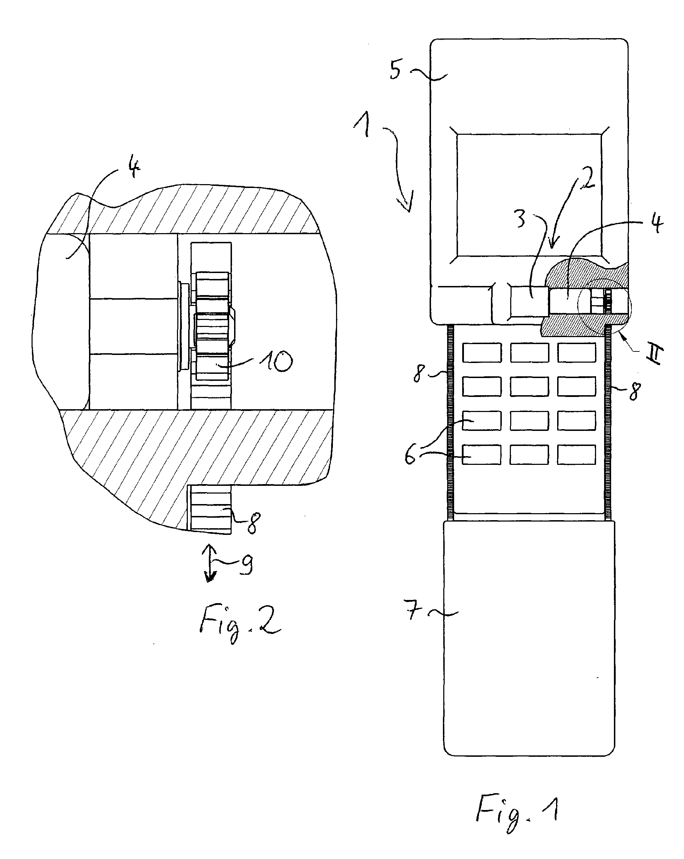

Die Fig. 1 zeigt eine Draufsicht auf ein Mobiltelefon 1 als Ausführungsbeispiel der Erfindung mit einer erfindungsgemässen Vibrationseinheit 2. Die Vibrationseinheit 2 verfügt über einen Elektromotor 3 und ein an der Ausgangswelle des Elektromotors 3 angeschlossenes Getriebe 4. Mit dem Bezugszeichen 5 ist das Gehäuse bezeichnet, welches insbesondere über eine Tastatur 6 und eine Tastaturabdeckung 7 verfügen kann, wobei die Tastatur 6 in der Fig. 2 angedeutet ist. Weiterhin kann eine Kupplung zwischen Getriebe und Zahn- oder Reibrad zwischengeschaltet werden, um bei einer Schockbelastung, die z.B. beim Fall aus grosser Höhe entstehen kann, Überlastungen und Zerstörung des Getriebes verhindern sollen.

Anstelle einer Tastatur 6 und einer Tastaturabdeckung 7 können auch ein Display 16 und eine Displayabdeckung oder eine kombinierte Tastatur- und Displayabdeckung an Stelle der Tastaturabdeckung 7 treten. Die Tastaturabdeckung 7 verfügt an beiden Seiten über Schienen 8, über die die Tastaturabdeckung 7 in Richtung des Doppelpfeiles 9 in Richtung der Hauptlängsachse des Mobiltelefones 1 bewegbar ist. Anstelle der Schienen können auch Wellen und Büchsen als Längsführungssystem verwendet werden.

Mit dem Bezugszeichen 4 ist das Getriebe bezeichnet. Dabei kann es sich um ein übliches Mikromotorgetriebe handeln, welches auf den Elektromotor 3 abgestimmt ist. Mit dem Getriebe 4 ist eine Kupplung und ein Zahn- oder Reibrad 10 verbunden, welches besser in der Fig. 2 zu erkennen ist.

Die Fig. 2 zeigt eine vergrösserte Detailansicht des Kreises II aus Fig. 1. Bei einer schnellen Hin- und Herbewegung der Abtriebswelle des Motors 2 kann bei einer Ausgestaltung der Erfindung das Reibrad 10 keine Haftung auf der angetriebenen Schiene 8 entwickeln, so dass ausschliesslich die Vibrationen auf das Gehäuse 5 übertragen werden. Falls dagegen eine langsame ständige Bewegung ausgeführt wird, dreht sich das Reibrad 10 in einer Weise, dass die Schiene 8 und damit die Abdeckung 7 in einer Richtung gemäss dem Doppelpfeil 9 bewegt wird. Alternativ dazu wird bei einem Antrieb mit Zahnrad anstelle eines Reibrades der bewegliche Teil des Gehäuses durch Kurzhubbewegung in Vibration versetzt. Weiterhin kann die Längsbewegung auch mittels einer Spindel-/Mutter-Kombination erzeugt werden.

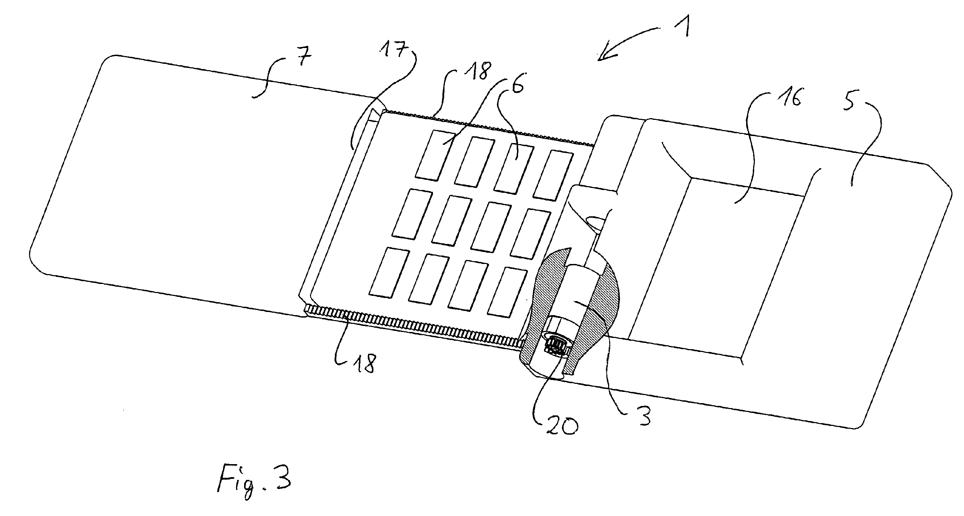

Die Fig. 3 zeigt eine teilweise geschnittene perspektivische Ansicht eines elektronischen Kommunikationsgerätes gemäss einem zweiten Ausführungsbeispiel. Gleiche Merkmale sind in allen Zeichnungen mit den gleichen Bezugszeichen versehen. Deutlich ist zu erkennen, dass die beiden Schienen 18 die Tastaturabdekkung 7 gegenüber dem Gehäuse 5 führen. Es wäre ebenso möglich, gegenüber der Schiene 18 auf der gegenüberliegenden Seite des Zahnrades 20 eine weitere Schiene vorzusehen, die sich bei einer Drehbewegung des Zahnrades 20 dann in die entgegengesetzte Richtung wie die Schiene 18 bewegt. Damit könnte eine getrennte Displayabdeckung verbunden sein, die sich gleichzeitig mit der Tastaturabdeckung 7 öffnet, sofern der Motor 2 zwischen Tastatur 6 und Display 16, also genau wie in der Fig. 3, angeordnet ist. Anstelle der Schienen kann auch eine in Büchsen gelagerte Welle als Linearführung dienen.

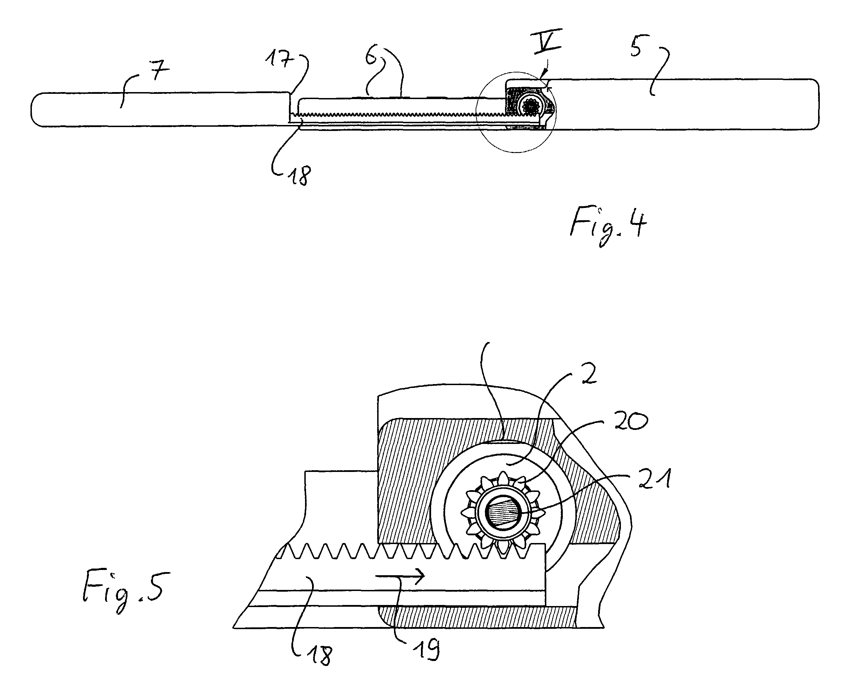

Die Fig. 4 zeigt eine schematische Seitenansicht des zweiten Ausführungsbeispiels eines Mobiltelefon 1 bei geöffneter Tastaturabdeckung 7. Hier bewegt sich die Tastaturabdeckung 7 über die Tastatur 6, wobei die Tastaturabdeckung 7 starr mit der Zahnschiene 18 verbunden ist. Diese Schiene 18 steht im Eingriff mit einem Zahnrad 20, welches direkt oder (in der Fig. 4 nicht dargestellt) über ein Getriebe mit dem Elektromotor 2 verbunden ist.

Die Fig. 5 zeigt eine vergrösserte Ansicht der Vibrationseinheit 2 nach Fig. 4. Der einen zylindrischen Aussenmantel aufweisende Motor 3 sitzt in einer zylindrischen Öffnung 24 in dem Gehäuse 5 des Mobiltelefons 1. Das Zahnrad 20 sitzt im Presssitz auf der Abtriebswelle 21, wobei zudem ein Formschluss vorgesehen ist. Das Zahnrad 20 greift mit wenig Spiel in die Zahnstange 18 ein. Bei einem eingehenden Anruf zum Beispiel wird der Motor 3 so angesteuert, dass mit hoher Frequenz ein kurzer Hub an die Zahnstange 18 übertragen wird, so dass hierbei eine Vibration des Mobiltelefons 1 spürbar ist. Im Gegensatz dazu steht die kontinuierliche Bewegung und Drehung des Zahnrades 20 in eine Drehrichtung, so dass sich die Zahnstange 18 in die Richtung des Pfeils 19 bewegt, d.h. die Tastaturabdeckung 7 schliesst. Beim Schliessen der Tastaturabdeckung 7 darf diese mit ihrer dem abzudeckenden Bereich zugewandten Vorderseite 17 nicht an einen Anschlag stossen, vielmehr ist ein kleiner Spalt zu lassen, so dass die Vibration bei geschlossener Tastaturabdeckung 7 eingesetzt werden kann.

Anstelle eines Mobiltelefons 1 ist diese Vibrationseinheit 2 auch bei jedem anderen mobile Kommunikationsgerät einsetzbar. Hierzu gehören sogenannte Palmtops oder handgehaltene Computer bzw. elektronische Agenden, Uhren und entsprechend verbundene Mehrzweckeinheiten.

Es ist ebenfalls denkbar, anstelle oder zusätzlich zu einer Tastaturabdeckung eine Antenne ausfahrbar zu gestalten.

## Patentansprüche

1. Mobiles elektronisches Kommunikationsgerät (1) mit einer Vibrationseinheit (2; 3, 4), die einen Elektromotor (3) umfasst, und mit einer elektronischen Steuerung zur Ansteuerung der Vibrationseinheit (2; 3, 4), so dass das elektronische Kommunikationsgerät (1) unter vordefinierten ersten Betriebszuständen in Vibrationen versetzbar ist, **dadurch gekennzeichnet, dass** eine bewegliche Abdeckung (7) oder Antenne vorgesehen ist, die über eine mechanische Kopplung (8, 10; 18, 20) mit der Vibrationseinheit (2; 3, 4) verbunden ist, und dass die elektronische Steuerung bei vordefinierten zweiten Betriebszuständen den Elektromotor (3) zur Rotation bringt, so dass über die mechanische Kopplung (8, 10; 18, 20) die bewegliche Abdeckung (7) sich öffnet oder schliesst bzw. die Antenne aus- oder eingefahren wird.

2. Kommunikationsgerät nach Anspruch 1, **dadurch gekennzeichnet, dass** die mechanische Kopplung ein Reibrad (10) und eine Reibschiene (8) sind, wobei die Reibschiene (8) mit der bewegliche Abdeckung (7) oder Antenne fest verbunden ist.

3. Kommunikationsgerät nach Anspruch 1, **dadurch gekennzeichnet, dass** die mechanische Kopplung ein Zahnrad (20) und eine Zahnradschiene (18) sind, wobei die Zahnradschiene (18) mit der bewegliche Abdeckung (7) oder Antenne fest verbunden ist.

4. Kommunikationsgerät nach Anspruch 1, **dadurch gekennzeichnet, dass** die mechanische Kopplung eine Spindel und eine Spindelmutter sind, wobei eine Schiene oder eine Welle/Büchse als Linearführung dienen und diese mit der beweglichen Abdeckung (7) oder Antenne fest verbunden ist.

5. Kommunikationsgerät nach einem der vorstehenden Ansprüche, **dadurch gekennzeichnet, dass** die bewegliche Abdeckung eine Tastaturabdeckung (7) oder eine Displayabdeckung oder ein Ständer zum Aufstellen des Gerätes ist.

6. Kommunikationsgerät nach einem der Ansprüche 1 bis 5, **dadurch gekennzeichnet, dass** die besagte Vibration mit einer hochfrequenten Hubbewegung der beweglichen Abdeckung (7) oder Antenne auslösbar ist.

7. Vibrationseinheit für ein Kommunikationsgerät nach Anspruch 6, **dadurch gekennzeichnet, dass** sie über ein Zahnrad (20) starr mit einer Zahnradschiene (18) verbunden ist, so dass eine hochfrequente kurze Hubbewegung der Zahnradschiene (18) einer Vibration entspricht.
